# EUROPEAN PATENT APPLICATION

(11) **EP 4 550 067 A1**
(43) Date of publication of application: **07.05.2025**
(21) Application number: 23207352.8
(22) Date of filing: 02.11.2023
(51) Int. Cl.: G05B 19/418

(54) **METHOD FOR CONTROLLING AND/OR MONITORING ONE OR MORE INDUSTRIAL PLANT SITES**

(71) Applicant: BASF SE, 67056 Ludwigshafen am Rhein (DE)
(72) Inventor: Engel, Daniel, 67061, Ludwigshafen am Rhein (DE); Becker, Markus Bernhardt, 67061, Ludwigshafen am Rhein (DE); Beckert, Verena, Zhanjiang, Guangdong 524076 (CN); Arcos-Diaz, Dario, 67061, Ludwigshafen am Rhein (DE); Pack, Robert, 68163 Mannheim (DE); Palacios Koo, Julio Enrique, 67061, Ludwigshafen am Rhein (DE); Ritze, Dominique, 67061, Ludwigshafen am Rhein (DE)
(74) Representative: Eisenführ Speiser

(57) **Abstract**

The invention refers to a method for assisting in controlling/monitoring plant sites. Manufacturing data associated with products is available on independent data systems. A graph database model associated with the industrial plant sites is received. A graph element in the graph database model associated with manufacturing data is further associated with a resolver function, if the manufacturing data associated with the graph element is available on different data systems. The resolver function is indicative of access information to the different data systems. A request associated with a controlling/monitoring task is received and applied to the graph database model utilizing the access information provided by the resolver function for accessing respective associated manufacturing data. A result of the application of the request to the graph database model is provided. Control signals are provided based on the result of the request associated with the controlling/monitoring task of the plant sites.

## Description

### FIELD OF THE INVENTION

The invention relates to a method, an apparatus and a computer program product for assisting and controlling and/or monitoring one or more industrial plant sites. Further, the invention relates to a method, apparatus and computer program product for generating a graph database model associated with one or more plant sites and a graph database model generated accordingly.

### BACKGROUND OF THE INVENTION

Today, industrial products are often produced in highly complex production processes involving a plurality of different industrial plant sites. But also, today's industrial plant sites are often highly complex with a plurality of production assets that have to be controlled and monitored for producing a respective product. Thus, any assistance in the controlling and/or monitoring of one or more industrial plant sites is highly valuable and increases not only the security but also the efficiency of an industrial production.

### SUMMARY OF THE INVENTION

It is an object of the present invention to provide a method, an apparatus and a computer program product that allow for an automatic, objective and technical resource conserving assisting in the controlling and/or monitoring of an industrial plant site, in particular, a large scale chemical industrial plant site. Controlling and/or monitoring an industrial plant site often requires highly trained and experienced personnel that is familiar with the specific production process and the industrial plant site. However, optimizing a large-scale production of an industrial product, for instance, decreasing an energy consumption, a waste production, etc. often requires not only to monitor and control, in particular, optimize, one production process at one industrial plant site but at a plurality of industrial plant sites involved in the production. All these industrial plant sites generally provide a plurality of data, in particular, manufacturing data, that can be related to the production process of the product. Manufacturing data can be provided by a plurality of sensors monitoring the production in an industrial plant site. But manufacturing data can also be associated with other information associated with the product, for instance, transport information, quality test information, product research data, product management data etc. For monitoring and/or controlling, in particular, in order to optimize the production of a product, it would be necessary not only to access all the manufacturing data of all industrial plant sites and associated operation units, but also to query, analyze and otherwise evaluate the respective manufacturing data. In particular, it is necessary to find relations between different parts of the manufacturing data that allow to answer respective questions that are relevant for the monitoring and/or controlling of the industrial production process.

However, such queries in the monitoring and/or controlling of the industrial plant site, in particular, of large chemical production sites, is often inefficient, time-consuming and does not lead to the expected outcome. One reason for this is that the production data is often widely spread over different storage locations, data management systems and applications that make it nearly impossible even to answer a simple question like "which parameters have been used in a production process of a specific product during a previous production" without time-consuming manual work, for instance, including manually accessing a plurality of databases, questioning respective plant personnel and analyzing the respective data.

Thus, the monitoring and/or controlling of an industrial plant site, in particular, with respect to an optimization of a production process of a complex large-scale industrial plant, is still a challenging task. It would therefore be advantageous if an automated, objective and technical resource conserving possibility for monitoring and/or controlling, in particular, for optimizing, a production process of an industrial plant site could be provided.

Utilizing a graph database model associated with one or more industrial plant sites, wherein a relation between the manufacturing data represented by an edge in the graph database model is associated with the revolver function, if the manufacturing data related by the graph edge is available on different data systems, wherein the resolver function is indicative of access information on the access to the related manufacturing data on the different data systems, allows knowledge on the processes, at the industrial plant site, the hardware of the industrial plant site, an organization structure of the industrial plant site, etc. that is naturally integrated into the graph database model to be easily accessed without any knowledge on when, where or how a specific manufacturing data set is stored. Thus, a monitoring and/or controlling task of an industrial plant site, in particular, with respect to optimizing a production in the industrial plant site, can be based on querying the graph database plant model that allows to access and evaluate manufacturing data in a fast and resource conserving manner.

In a first aspect of the present invention, a computer implemented method for assisting in controlling and/or monitoring one or more industrial plant sites is presented, wherein manufacturing data associated with one or more products produced by the one or more industrial plant sites is available on a plurality of independent data systems, wherein the method comprises a) receiving a graph database model associated with the one or more industrial plant sites, wherein the graph database model is formed by a graph database comprising graph elements including graph nodes and graph edges, wherein graph edges are indicative of relations between graph nodes, wherein at least a part of the graph database comprises graph elements associated with manufacturing data, wherein a graph element in the graph database model associated with manufacturing data is further associated with a resolver function, if the manufacturing data associated with the graph element is available on different data system, wherein the resolver function is indicative of access information on the access to the associated manufacturing data on the different data systems, b) receiving a request associated with a controlling and/or monitoring task of the one or more industrial plant sites, wherein the request is associated with graph elements of the graph database model, c) applying the received request to the graph database model by querying and/or following the graph elements in accordance with the request, wherein the querying and/or following of the graph elements comprises utilizing the access information provided by the resolver function for accessing respective associated manufacturing data when following and/or querying a graph element associated with a resolver function, d) providing a result of the application of the request to the graph database model, and e) providing control signals based on the result of the request associated with the controlling and/or monitoring task of the one or more industrial plant sites.

The method refers to a computer implemented method and can thus be performed by a general or dedicated computer adapted to perform the method, for instance, by executing a respective computer program. The method is configured for assisting in monitoring and/or controlling of an industrial plant site, preferably, a chemical industrial plant site for producing one or more chemical products. In particular, the assisting can refer to helping a user given the task of monitoring and/or controlling the industrial plant, for example, by providing respective data, providing control suggestions, directly controlling at least a part of the industrial plant site, informing, for instance, flagging parts of a process or an industrial plant site according to predetermined criteria, or automatically monitoring at least a part of the industrial plant site with respect to certain objectives. Preferably, the controlling and/or monitoring is performed with respect to a predetermined optimization objective. For example, the optimization objective can refer to optimizing an energy consumption of the industrial plant site, to reducing a waste production of the industrial plant site, reducing a resource consumption of the industrial plant site, reducing a CO₂ emission of the industrial plant site, etc.

The manufacturing data is associated with one or more products produced by the one or more industrial plant sites. Generally, manufacturing data can comprise any data or information that is related with the respective product itself, its production process, its transportation, its handling, its operation, its management, etc. For example, the manufacturing data can comprise production and processing parameters that were utilized during the production of a product, data related to respective pre-products necessary for producing the product, tracking data from transportation of the product, accounting and vendor details, etc. In a preferred embodiment, the manufacturing data comprises sensor data, in particular, time series data, from sensors monitoring a production of the products or respective pre-products of the product. Such sensors can be, for instance, mass flow sensors, temperature sensors, pressure sensors, CO₂ sensors, oxygen sensors, particle sensors, etc. providing respective sensor data. Since, as described above, the manufacturing data can refer to a plurality of different aspects of the product and thus comes from a plurality of different sources, such manufacturing data is generally available not in one central data system but on a plurality of independent data systems.

Independent data systems are data systems which are generally operated independent of each other, for instance, each with an independent data management, data structure, user and/or data interface, communication protocols, storage locations, capabilities and structures, etc. In particular, it can be expected that different industrial plant sites comprise different and in most cases independent data systems. Also a transport provider for transporting a product, or a provider of pre-products of a product comprise data systems that are independent of the data system of a producer of the product. Moreover, in today's industrial plant sites, for security reasons often different layers of managing, controlling and monitoring a production are provided that are each independent of each other and only interact through respective interfaces. However, although the respective data systems are independent, they can be communicatively coupled and provide respective interfaces for data transfer between the independent data systems. Thus, the data systems are independent but not closed with respect to each other. Generally, each independent data system comprises at least one data storage on which a respective part of the manufacturing data is stored and can be accessed by a respective data interface.

In a step, the method comprises receiving a graph database model associated with the one or more industrial plant sites. The graph database plant model is formed by a graph database. Generally, a graph database is a database that uses graph structures with nodes, edges and properties to represent and store data, wherein data items are stored related to the collection of nodes and edges of a graph database. In this context, edges of the graph database represent a relationship between nodes connected by the respective edges. Nodes represent items of interest for which respective relations are tracked by the graph database. Moreover, properties refer to information related to a respective node item. Thus, a graph database does not only allow to store data items but also to store relationships between the data items and properties of the data items such that the data is linked together in a context-sensitive way such that respective complex data structures can be visualized and queried. At least a part of the graph database comprises graph elements associated with manufacturing data. Generally, the manufacturing data can be indirectly associated with a graph element for example, via a related graph element associated with the manufacturing data.. Preferably, the resolver function is associated with an edge that represents the relation between two nodes from which at least one is associated with manufacturing data.

If the manufacturing data related by at least one graph edge is available on different data systems, at least one of the respective graph elements associated with manufacturing data in the graph database model is associated with a resolver function. Preferably, the graph element associated with the manufacturing data is an edge relating the manufacturing data of two nodes, wherein the edge is then associated with the resolver function. In other examples, also a node associated ith manufacturing data can be associated with a resolver function. The resolver function is indicative of access information on the access to the related manufacturing data on the different data systems. In particular, the resolver function can be a constant, a mapping information or a custom access function. A constant resolver function can be utilized to directly add missing data to a graph database. Mapping information, for example, in form of a mapping table, can be configured to connect the graph database with a relational database. For example, the mapping information can define a key relation between the graph database and the to be accessed external database that has to be utilized during a data query along the graph database. Custom access functions are configured to allow to access databases in a proprietary format. Such databases can provide very specific access interfaces, drivers or data formats. The custom access functions can then be adapted to respective databases by encoding these access information.

Thus, the resolver function allows to access, retrieve and join relevant manufacturing data during a query, that is provided by different data systems. For example, if for monitoring purposes a production record for multi-product multi-batch production has to be prepared, wherein the production is performed in an industrial plant site with multiple reactors producing multiple different products simultaneously, such a graph database model comprising resolver functions between manufacturing data provided on different data systems can be utilized. In particular, in the above exemplary scenario, information needed for such a production record is typically stored on different distributed and homogeneous systems and data sources that are independent of each other. The graph database model allows to find, for example, a recipe for a particular product, where to find the operational production steps of the respective product, the measurements of each sensor and the association of which sensor belongs to which reactor. Moreover, the resolver function also allows to directly retrieve, for example, the measurement data of the sensors from each individual independent data system. Thus, the values from the measurements of those sensors are retrieved that are attached to a reactor that was in use for the production of a respective product at the respective time and can be joined to the respective record. Preferably, the access information associated with the resolver function comprises at least one of authorization information, storage location information, access protocol information. Moreover, the resolver function can be associated with context information relating to the data context. For example, the context information can refer to at least one of a model depth, a data model, and primary data key of the to be accessed data.

Generally, a graph database model associated with the industrial plant site can be created utilizing known graph database creation models and utilizing respective knowledge about the industrial plant site. This knowledge can stem, for instance, from operators of the industrial plant sites inputting their knowledge into the graph database model but also from construction information, maintenance information, installation information, process information, blueprints, organization information, operational information, geographical information, etc. For utilizing, the graph databased model is preferably already generated and stored on a respective storage unit such that it can be utilized for a plurality of application.

The receiving of the graph database model can then refer to accessing the storage and/or application, on which the graph database model is already stored and, for instance, querying the graph database model for respective information of the graph database plant model. In particular, the graph database model can be provided with a programming interface that is configured to provide functions to a user that can be utilized for querying the graph database. In this case the receiving of the graph database can refer to accessing the programming interface, for instance, an application programming interface. Moreover, the graph database can also be provided with a user interface for allowing a user to input respective queries to the graph database. In this case the receiving of the graph database can comprise accessing the user interface. A user can also utilize an input unit for indicating, for instance, which graph database model should be utilized such that the graph database model indicated by the user is retrieved.

In a further step, a request associated with the controlling and/or monitoring task of the one or more industrial plant sites is received. Generally, the association with the controlling and/or monitoring task can refer to any kind of data retrieval that facilitates performing the task. For example, a request associated with the monitoring task can refer to generating a report on one or more aspects of a production of a specific product during a specific time that allows to monitor one or more objectives of the respective production. A request associated with the controlling task can refer to determine one or more currently utilized parameters in a production or requesting a quality of different provided pre-products in order to adapt a production process of the product to the respective quality. The request is associated with graph elements of the graph database model, i.e. refers to data and information that is provided in the graph database model in form of one or more graph elements. Generally, the request can be received via an input unit, for instance, realized as a user interface, into which a user can input the respective request. However, the request can also be received from a storage unit, for example, if predetermined rules indicate an automatic requesting. The request can then be provided in any known way that allows to apply the request to the graph database model or to translate the request such that it can be applied to the graph database model. For example, the request can utilized dedicated application programming interfaces or known graph query languages such as GraphQL or Cypher. In an example, the request can also be received in form of a natural language question, wherein in this case the next step of applying the received request to the graph database model can refer to utilizing semantic rules and models to translate the natural language question to a graph database request, for instance, into a graph query language. However, the request can also be provided directly in form of a graph database request, for instance, in form of objects and relations between the objects that can be searched in the graph database.

The method further comprises applying the received request to the graph database model. The applying refers to querying and/or following the graph elements in accordance with the request. For example, graph nodes can, during a query, be regarded as data filters such that only the data represented by the node is accessed, whereas relations can be followed depending on the query to access related data. The querying and/or following of the graph elements comprises utilizing the access information provided by the resolver function for accessing respective related manufacturing data when following and/or querying a relation associated with the resolver function. For example, the resolver function allows to access a specific database via a data interface and to receive respective manufacturing data associated and/or represented by a queried node of a graph database. The such accessed manufacturing data can then be retrieved and joined with further manufacturing data being part of the result of the query. However, the accessed manufacturing data can also be utilized to further follow another relation as provided in the graph database to other manufacturing data. For example, the query can be to "retrieving a temperature of a specific production process step during a production of a specific product". The applying of the request to the graph database model can then refer to following a relation of an identity of the product to a respective industrial plant site that has produced the respective product. Then a relation of the industrial plant site to its operation assets can be followed to identifying the operation assets having performed the respective production processing step at a respective time of production. This allows to find a temperature sensor measuring the temperature of a respective asset by following a further relation. The storage location of the temperature data measured by the sensor at a specific time can then be accessed. The access information needed during the following the query can be provided as a respective resolver function for accessing the data.

The result of the application of the request to the graph database model can then be provided, for instance, to an output screen or for further processing. Further control signals can be provided based on the result of the request associated with the controlling and/or monitoring task of the one or more industrial plant sites. Generally, the control signals can be any signal that allows to control one or more operational units that assist in controlling and/or monitoring an industrial plant site. For example, the control signal can relate to simply visualizing a result of a request to the graph database on a controlling and/or monitoring user interface such that the user can decide on further actions in his/her task based on the visualization. However, the control signals can also be more complex, for example, can directly allow for a controlling of one or more operation units for producing the product. For example, if a query relates to determining utilized production parameters of a product production during a past production time, the control signals can directly relate to implementing the found production parameters into the operation units performing the production. With respect to a monitoring task, the control signals can also relate to controlling a monitoring interface. For instance, one or more operation assets can be flagged for which routine queries have found unusual operation parameters. Moreover, the control signals can relate to directly causing a maintenance action, or the control signals can cause turning on or off of respective operation units, if respective monitoring queries results fulfil predetermined maintenance or security criteria.

In a preferred embodiment, an industrial plant site comprises one or more assets utilized in one or more industrial processes producing the one or more products, wherein at least a part of the graph database model represents the one or more industrial processes and the assets performing the one or more industrial processes of the one or more industrial plant sites by mapping the assets and the material transport processes between assets to graph elements, and wherein at least a part of the manufacturing data is associated with the production process of the product, preferably, to sensor measurements during the production process of the product.

For example, an operation node can simply indicate the presence of a specific operation asset performing a specific process at the industrial plant site, for instance, an operation asset can be indicative of the presence of a mixer and a certain location in the industrial plant site. However, also more than one node can be indicative of one operation asset in the industrial plant site, for example, if the operation asset comprises different parts that can also be operated independent of each other. For example, an operation asset can comprise not only a mixer, but also a heater and a mill, wherein all of these hardware units can be operated independent of each other but are used to perform the same overall process at the industrial plant site. However, if performing the same process in an industrial plant site, respective hardware units can also be indicated as the same node in the graph database. For instance, the mixer, the heater and the mill can also be indicated as one operation asset performing a specific mixing process in the industrial plant site at only one node. Further, the graph database can comprise nodes referred to as transport nodes that are related to a mass transport between operation assets. At the transport nodes, data items are stored that refer to a transport of a substance, i.e. a mass transport, between respective operation assets of the industrial plant site. For example, if a fluid is transported from a mixer after mixing to a heater for heating the fluid, a transport node is provided in the graph database indicating the mass transport between the two operation assets. For example, at mass transport nodes information on the mass transport can be stored like a mass flow, the kind of substance transported, a flow direction, etc. Further, the graph database can comprises nodes referred to as sensor nodes that are related to sensors of the industrial plant site. For example, the sensor nodes can store information on a sensor measuring a temperature of a heater at the industrial plant site. The information can refer to the kind of sensor, the location of the sensor, the kinds of measurements performed, a timing of measurements performed, an identity of the sensor, etc. In particular, time series data of the sensors can be stored in relation to the sensor nodes. Further, the edges of the graph database can be utilized to indicate the relation between the different nodes of the graph database model. In an example, a substance is transported from one operation asset to another operation asset. A first edge can be provided between the first operation node indicative of the first operation asset and the transport node indicative of the mass transport. A second edge can be provided between the transport node indicative of the mass transport and the second operation node indicative of the second operation asset. Moreover, if a sensor measures one or more quantities related to an operation asset, a respective edge can be provided between the respective operation asset and the respective sensor. Also, if a sensor measures one or more quantities during a mass transport, for instance, during a fluid flowing from one operation asset to another operation asset, an edge can be provided between the respective sensor and the respective transport graph element representing the transport Such transport graph elements can represent material transport information like a material transported, a transported material characteristics, e.g. viscosity, a temperature, pressure, etc. of the transported material, etc. A respective resolver function can then be configured to provide a link or pointer to a respective table in an enterprise resource planning or manufacturing execution system for material information and/or to a product information management system for measurement values. Respective key relations associated with the resolver function can then be a tag or a measurement point number. Moreover, the context information provided by the related graph elements can be utilized together with the resolver function to determine further information for accessing the respective material data, for instance, facility, date, batch number, etc. Thus, the graph database can comprise and structure the knowledge available about the industrial plant site and the processes performed in the industrial plant site. In particular, the advantage of the graph database is that not only the data is stored but also the relation of the data is available and is indicative of the structure of the industrial plant site and all relations between the hardware of the industrial plant site.

In an embodiment, the access information associated with the resolver function is provided in form of functions on an application programming interface for a respective data system. In particular, the resolver function is associated with functions on an application programming interface for a respective data system that can be utilized for accessing respective manufacturing data associated with a graph element. For example, different independent data systems can comprise different application programming interfaces that allow to define functions, for instance, data searching, locating and receiving functions on the respective data system. These functions provided by the application programming interface can then be associated with the resolver function such that they can be utilized during the resolving of a query along a graph element associated with the resolver function.

In an embodiment, the one or more industrial plant sites are organized in form of different operation units each comprising and operating at least one of the plurality of independent data systems on which manufacturing data is available, wherein an operation unit is associated with the operation of one or more industrial plant sites and/or parts of one or more industrial plant sites, wherein the graph database model is organized in a layered structure in which each layer represents an operation unit and wherein edges between nodes spanning two layers are associated with a resolver function. Operation units allow the operation of a complex industrial plant site in an organized manner and can be based on a technical structure, a control structure, a geographical structure, an organizational structure, a service structure, etc. or a combination of such possible organization structures. A layer is defined as all parts of the graph database model that comprise nodes that belong to the same operation unit. However, operation units can also overlap or can be organized hierarchically. For example, an operation asset like a reactor in an industrial plant site can be associated with more than one operation unit. Or, one operation unit can itself be associated with a higher ranking operational unit. The interrelation between the operation units can then be represented by the graph database model utilizing a respectively layered structure in which each layer represents an operation unit and edges between two layers, i.e. between two nodes of two layers, represent the relation between the operation units. Preferably, the layers of the graph database model representing the operation units, are hierarchically organized in the graph database model based on a geographic context of the operation units. Organizing the graph database model based on a geographic context of the operation units, for instance, based on a location of the operation units or based on whether the operation units are interregional, regional or local operation units, allows for a clear and functional structure that allows for an easy embedding of operational units in the graph database model. Additionally or alternatively, the graph database model can be organized in contextual layers of the operation units. For example, operation units associated with chemical processes can be part of a layer, physical assets can be part of another layer, organization operation units, for instance, control and management units, can be part of another layer, logistic operation units can also be part of another layer, etc. This allows the graph database model to also represent the organizational structures and hierarchies that play a role in the production of a product, in particular, a chemical product.

In a further aspect of the invention, a computer-implemented method for generating a graph database model associated with a one or more industrial plant sites is presented, wherein the method comprises a) receiving manufacturing data information indicative of storage conditions of manufacturing data, b) receiving industrial plant site information indicative of physical and/or data organisational structures of the one or more industrial plant site, c) receiving data system information indicative of access information on one or more data systems associated with the one or more industrial plant site and the manufacturing data, d) generating a graph database model based on the manufacturing data information, the industrial plant site information and the data system information, wherein the graph database model is formed by a graph database comprising graph elements including graph nodes and graph edges, wherein graph edges are indicative of relations between graph nodes, wherein at least a part of the graph database comprises graph elements associated with manufacturing data, wherein a graph element in the graph database model associated with manufacturing data is further associated with a resolver function, if the manufacturing data associated with the graph element is available on different data system, wherein the resolver function is indicative of access information on the access to the associated manufacturing data on the different data systems, and e) providing the generated graph database model. Generally, the generated graph database model refers to a graph database model as described above, and can be utilized in the method for assisting in controlling and/or monitoring an industrial plant site as described above.

In a further aspect, a graph database model associated with a one or more industrial plant sites is presented, wherein the graph database model is formed by a graph database comprising graph elements including graph nodes and graph edges, wherein graph edges are indicative of relations between graph nodes wherein at least a part of the graph database comprises graph elements associated with manufacturing data, wherein a graph element in the graph database model associated with manufacturing data is further associated with a resolver function, if the manufacturing data associated with the graph element is available on different data system, wherein the resolver function is indicative of access information on the access to the associated manufacturing data on the different data systems. Generally, the generated graph database model refers to a graph database model as described above, and can be utilized in the method for assisting in controlling and/or monitoring an industrial plant site as described above.

In a further aspect, an apparatus for assisting in controlling and/or monitoring one or more industrial plant sites is presented, wherein manufacturing data associated with one or more products produced by the one or more industrial plant sites is available on a plurality of independent data systems, wherein the apparatus comprises one or more processors configured for a) receiving a graph database model associated with a one or more industrial plant sites, wherein the graph database model is formed by a graph database comprising graph elements including graph nodes and graph edges, wherein graph edges are indicative of relations between graph nodes, wherein at least a part of the graph database comprises graph elements associated with manufacturing data, wherein a graph element in the graph database model associated with manufacturing data is further associated with a resolver function, if the manufacturing data associated with the graph element is available on different data system, wherein the resolver function is indicative of access information on the access to the associated manufacturing data on the different data systems, b) receiving a request associated with a controlling and/or monitoring task of the one or more industrial plant sites, wherein the request is associated with graph elements of the graph database model, c) applying the received request to the graph database model by querying and/or following the graph elements in accordance with the request, wherein the querying and/or following of the graph elements comprises utilizing the access information provided by the resolver function for accessing respective associated manufacturing data when following and/or querying a graph element associated with a resolver function, d) providing a result of the application of the request to the graph database model, and e) providing control signals based on the result of the request associated with the controlling and/or monitoring task of the one or more industrial plant sites.

In a further aspect, an apparatus for generating a graph database model associated with a one or more industrial plant sites is presented, wherein the apparatus comprises one or more processors configured for a) receiving manufacturing data information indicative of storage conditions of manufacturing data, b) receiving industrial plant site information indicative of physical and data organisational structures of the one or more industrial plant site, c) receiving data system information indicative of access information on one or more data systems associated with the one or more industrial plant site and the manufacturing data, d) generating a graph database model based on the manufacturing data information, the industrial plant site information and the data system information, wherein the graph database model is formed by a graph database comprising graph elements including graph nodes and graph edges, wherein graph edges are indicative of relations between graph nodes, wherein at least a part of the graph database comprises graph elements associated with manufacturing data, wherein a graph element in the graph database model associated with manufacturing data is further associated with a resolver function, if the manufacturing data associated with the graph element is available on different data system, wherein the resolver function is indicative of access information on the access to the associated manufacturing data on the different data systems, and e) providing the generated graph database model.

In a further aspect, a computer program product for controlling and/or monitoring one or more industrial plant sites is presented, wherein the computer program product comprises program code means causing an apparatus as described above to carry out the method as described above.

In a further aspect, control signals are presented generated by a method as described above and/or the apparatus as described above.

In a further aspect, a use of the apparatus as described above for controlling and/or monitoring one or more industrial plant sites is presented.

It shall be understood that the method described above, the apparatus described above and the computer program product described above have similar and/or identical preferred embodiments, in particular, as defined in the dependent claims.

It shall be understood that a preferred embodiment of the present invention can also be any combination of the dependent claim or above embodiments with a respective independent claim.

These and other aspects of the present invention will be apparent from and elucidated with reference to the embodiments described hereafter.

### BRIEF DESCRIPTION OF THE DRAWINGS

In the following drawings:
- Fig. 1: shows schematically and exemplarily an embodiment of a system for assisting and controlling and/or monitoring one or more industrial plant sites,
- Fig. 2: shows schematically and exemplarily a flow chart of a method for assisting and controlling and/or monitoring one or more industrial plant sites, and
- Fig. 3: shows schematically and exemplarily an embodiment of an organization of an exemplary graph database model.

### DETAILED DESCRIPTION OF EMBODIMENTS

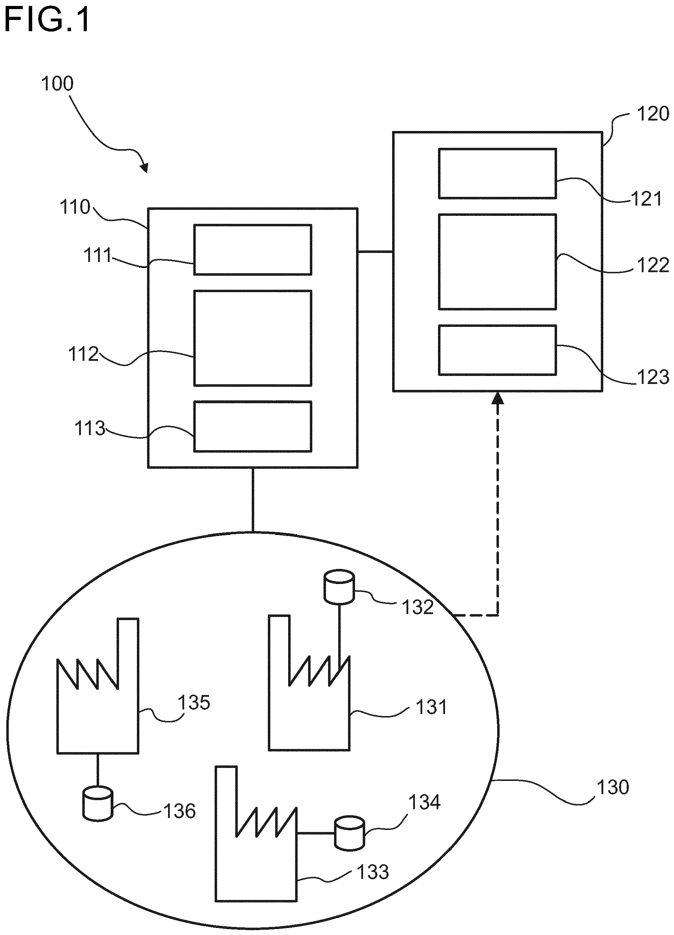

Fig. 1 shows schematically and exemplarily a system 100 allowing to assist in controlling and/or monitoring one or more industrial plant sites. In this example, three industrial plant sites 131, 133, 135 are exemplarily shown belonging to an industrial complex 130. The industrial plant sites are configured to produce one or more industrial products, preferably, chemical products. During the production of an industrial product, manufacturing data is generated. For example, during a planning stage, planning and recipe data can be generated. During the production, for example, process data from sensor measurements monitoring the production of the product is generated. Moreover, further auxiliary data is generated like logistics data, pre-product and product quality data, status data, accounting and contract data, etc. All this generated data can be regarded as being associated with the produced product. In most cases, the data will be generated by different data sources and at different data locations and will not be available on a central platform. Exemplarily, Fig. 1 shows independent data systems 132, 134, 136 for each of the industrial plant sites. The data systems 132, 134, 136 are independent. Independent data systems are managed, organized and structured independent from each other and thus in a decentralized manner. Thus, for independent data systems there is no central data organization unit that allows for a direct and central access to the manufacturing data available on the independent data systems. For example, manufacturing data generated during production steps performed by industrial plant site 131 are only stored and available on data system 132, manufacturing data generated during production steps performed by industrial plant site 133 are only available on independent data system 134, etc. Moreover, manufacturing data, like transport data, generated during a transport of at least parts of the product from one industrial plant site to the other can even be stored on a further independent data system of a transport vendor not shown in Fig. 1.

With respect to many tasks in controlling and/or monitoring one or more industrial plant sites, it can be important to access a combination of different manufacturing data parts. For example, it can be important to determine previously utilized process parameters for producing a product. To assist in this and other tasks of controlling and/or monitoring one or more industrial plant sites, the system 100 comprises a respective apparatus 110. The apparatus 110 can be realized in form of any one or more computers. For example, the apparatus 110 can be realized as a general or dedicated computer hardware and/or software combination. However, the apparatus can also be realized in form of distributed computing. For example, one or more processors can be configured to perform the method for assisting and controlling and/or monitoring one or more industrial plant sites as will be described in the following in a distributed manner, for example, in a cloud environment. The apparatus 110 comprises an input unit 111, one or more processors 112 and an output unit 113. The input unit 111 can be a general interface for accessing and/or receiving data. In particular, the input unit 111 is configured to receive a graph database model associated with the one or more industrial plant sites of the industrial complex 130. For example, the input unit 111 can receive the graph database model from a graph database generation apparatus 120 configured to generate a graph database model as will be described in the following.

The apparatus 120 for generating a graph database model can comprise an input unit 121, one or more processors 122 and an output unit 123. Also in this case, the input unit can be realized as any kind of data interface that allows to access and/or receive data. In particular, the input unit 121 is configured to receive manufacturing data information, industrial plant site information and data system information. The manufacturing data information is indicative of storage conditions of available manufacturing data. For example, manufacturing data information can indicate storage locations, data identifiers, etc. of manufacturing data. In the example shown in Fig. 1, the manufacturing data information can, for instance, indicate that sensor measurements from monitoring production processes performed by industrial plant site 131 are stored on data system 132. The industrial plant site information is indicative of physical and/or data organizational structures of the one or more industrial plant sites. For example, physical organizational structures can refer to the operation assets and relations between the operation assets of the industrial plant sites. Data organizational structures of one or more industrial plant sites can be indicative of data structures associated with the industrial plant site. These structures can be security structures, management and controlling structures, monitoring structures, operational structures, etc. that are associated with the processing of data at the industrial plant site. The data system information is indicative of access information on one or more data systems associated with the one or more industrial plant sites and the manufacturing data. For example, the access information can refer to the communication protocols utilized by the data system of an industrial plant site, to security protocols utilized by an industrial plant site, to data formats utilized by a data system, application programming interface functions provided by the data system, etc. All this information can be received, for instance, by accessing respective databases, querying operators of the industrial plant site, accessing and analyzing information like blueprints of industrial plant sites, structural diagrams of data systems and industrial organizations, etc. In particular, it is preferred that the information is analyzed, filtered and cleared by a user in a user machine based interaction process.

The one or more processors 122 are then configured to generate a graph database model based on the manufacturing data information, the industrial plant site information and the data system information. The graph database model can be generated based on known graph database generation methods. For example, respective templates can be utilized. Preferably, the graph database model is generated in a user machine interaction process in which a user utilizes respective functions provided by the apparatus 120 to generate the graph database based on the received information.

The graph database model is formed by a graph database comprising graph elements. The graph elements include graph nodes and graph edges. Graph edges are indicative of relations between graph nodes. At least a part of the graph database comprises graph elements associated with manufacturing data. For example, graph nodes can represent manufacturing data and graph edges relations between the manufacturing data. However, graph nodes can also refer to assets and the assets like production assets or sensors that generate manufacturing data such that the graph nodes not directly represent the manufacturing data but are associated with the manufacturing data. If the manufacturing data associated with a graph element is available on a different data system, a resolver function is further associated with the graph element. For example, if a relation between manufacturing data represented by an edge in the graph database model can be associated with a resolver function to access the manufacturing data of the respective nodes. For example, manufacturing data stored on data system 132 can be related in the graph database model with manufacturing data stored on data system 134. For example, the relation can be a pre-product/product relation. Since in this case the manufacturing data is stored in different data systems, the relation could be associated with a resolver function. The resolver function is then indicative of access information on the access to the related manufacturing data on the different data systems. For example, the resolver function in the example above can provide access information on both the access to the data system 132 and the access to the data system 134. However, if the graph database indicates a hierarchical or directed relation in this case in which a user can only follow from the manufacturing data on the graph database 134 to the manufacturing data of the pre-product in the graph database 132, then the resolver function can also only include access information on the graph database 132. The access information can refer to any information that allows a user of the graph database model to access the data system and optionally retrieve the respective manufacturing data. For example, the access information can comprise authentication data, application programming interface functions, communication protocols, data storage locations, data formats and data structure information, etc. Depending on the respective needed access information for a specific data system, the resolver function can be constant, a mapping function or a custom access function.

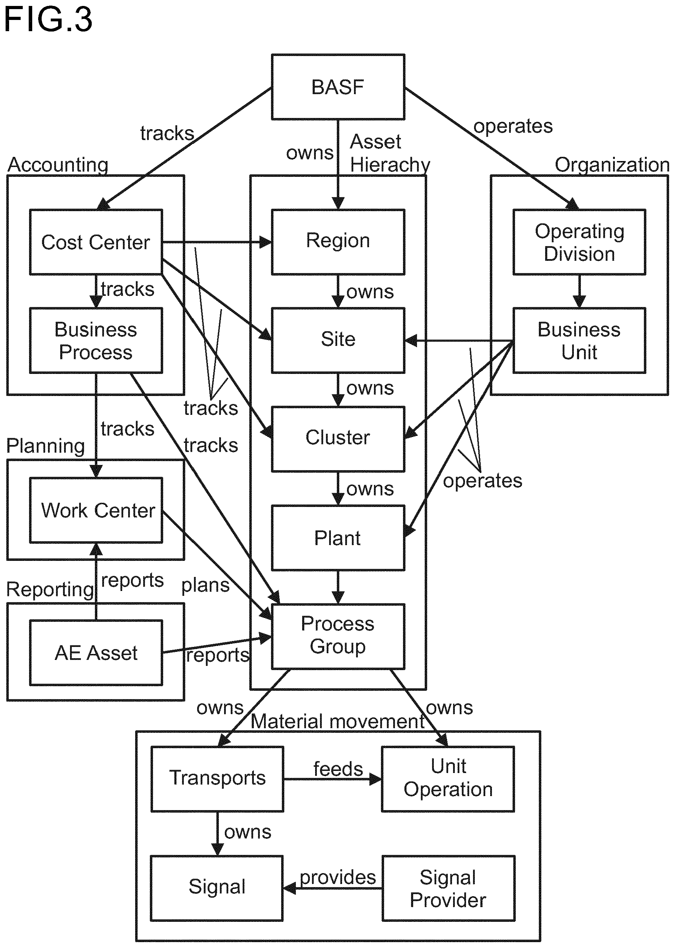

Fig. 3 shows a schematic example of a graph database model and will be described in more detail when discussing the specific more detailed examples. The output unit 123 of the apparatus 122 can then again also be realized as a data interface that allows to provide the respective generated graph database model. For example, the output interface 123 can output the graph database to a storage unit on which the respective graph database model is stored. However, the output unit 123 can also directly provide the graph database model to the input unit 111.

Further, the input unit 111 is configured to receive a request associated with the controlling and/or monitoring task of the one or more industrial plant sites. For example, the request can be received via a user interface into which a user can input his/her request. Generally, the request is associated with graph elements of the graph database model and thus refers to requesting manufacturing data associated with the graph database model. The request can be provided in any human understandable format, for example, as simple text question in natural language. However, also other possible request formats can be utilized. For example, allowing the user to input a graph pattern to be searched, providing special language or graph based functions for formulating the request, etc. The one or more processors 112 of the apparatus 110 are then configured to apply the received request to the graph database model. For example, the applying of the received request can in a first step comprise analyzing the request according to its context. For example, if the request is provided as natural language question, in a first step respective natural language processing methods can be utilized to analyze the request. Based on this analysis, the request can then be translated into a format and structure as defined for querying and/or following the graph elements of the graph database model in accordance with the request. Generally, for querying such graph database models, respective querying and/or following methods are known. During the querying and/or following of graph elements, the access information provided by the resolver function can be utilized for accessing respective related manufacturing data when following and/or querying a relation associated with the resolver function.

For example, a request can refer to manufacturing data related to a pre-product produced by industrial plant site 131, wherein the product is produced by industrial plant site 133. The querying of the graph elements of the graph database model can then at one point lead to a relation between the manufacturing data stored in data system 134 related to the product and manufacturing data stored on data system 132 related to the pre-product. Since this manufacturing data is stored in different data systems, the relation will comprise a resolver function, wherein during the query the resolver function allows to access data system 132 to retrieve the manufacturing data of the pre-product and, for instance, present the manufacturing data as part of the result of the query to a user.

The output unit 113 that can also be configured as a data interface but can also be considered additionally or alternatively as a user interface, can then provide a result of the application of the request to the graph database model. In particular, the output unit 113 can be configured to provide control signals based on the result of the request associated with the controlling and/or monitoring task of the one or more industrial plant sites. For example, the control signals can refer to generating a report on the result or based on the result that can be presented to a user on a respective user display. The user can then, for example, decide based on the report for further controlling and/or monitoring actions. However, the control signals can also directly refer to a controlling and/or monitoring of an industrial plant site. For example, the control signals can cause an implementation of at least a part of product process parameters into a production process of a product based on the result of the request. In another example, depending on certain criteria and predetermined rules applied to the result of the request, control signals can be provided that lead to certain monitoring actions, like security measures, maintenance measures, testing measures, etc.

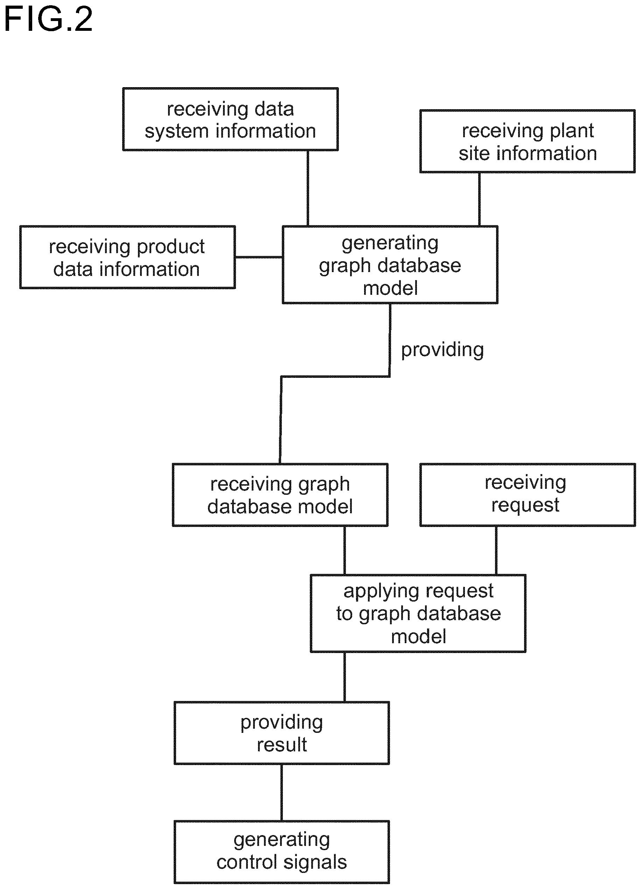

Fig. 2 shows schematically and exemplarily a flow chart of a method for assisting in controlling and/or monitoring one or more industrial plant sites. The method can be performed, for instance, by the system as described with respect to Fig. 1. In the first steps, the method optionally comprises generating the graph database model. Thus, these steps can be regarded as a method for generating a graph database model and can be performed before performing the method for assisting and controlling and/or monitoring an industrial plant site. The method can be performed independent of the other method or integrated in the other method. Firstly, the method comprises receiving manufacturing data information, data system information and plant site information as described above. In a next step, then based on all this information, a graph database model is generated, for instance, in a human machine interaction process or purely automatically. This graph database model can then be provided, for instance, to a storage unit from which it can then be utilized. However, the graph database model can also be directly provided to the step for assisting in the controlling and/or monitoring of a plant site. This method then comprises in a first step receiving the graph database model either directly form the generating step or from the storage on which the graph database model has been stored. Further, the method comprises receiving a request associated with the controlling and/or monitoring task. The request can then be applied to the graph database model and the result of the request can be provided. Based on the respective result, control signals can then be generated and utilized, for instance, for controlling and/or monitoring the production process of the product.

In the following, some more detailed exemplary and preferred embodiments will be described. Generally, it is preferred that the graph database model represents, for example, as digital twin, a production Verbund comprising one or more industrial plant sites. The graph database model is preferably generated using graph-based context modeling.

In a preferred embodiment the graph database model is generated utilizing a set of typed nodes and edges. Typing is defined as providing predefined types of nodes and edges. For example, a type of node can be defined for representing manufacturing data and another type of node can be defined for representing a production asset. Preferably, the graph database model represent the Verbund operation asset hierarchy in a geographic context. For example, operation assets can be represented related to a region directing to a site directing to a cluster directing to a plant directing to a process group directing to an operation unit. This allows for a clear structuring of the operation assets in the graph database model. Further, it is preferred that transport processes between operation units and/or process groups are also represented by the graph database model.

In order for the graph database model to represent parts of the manufacturing data that is available on different independent systems, respectively types dedicated nodes and crosslink edges are utilized to reference these systems. In particular, resolver functions are introduced to edges that connect nodes referring to data on different systems. This allows the graph database model to represent manufacturing data, for example, in its corresponding context of organization, accounting, production planning, reporting, and geo features.

The resolver function is configured to allow for a graph traversal between different layers of the graph. A layer can in this case be defined as comprising all nodes of the graph database model related to a respective independent system. Preferably, a node is generated to comprise standardized information on a respective system comprising the data represented by the node. Applying a request to the graph database can be realized by traversing and accessing data represented by the nodes of the graph database. The traversing of the graph database is facilitated by edge-dependent function, in particular, the resolver function, associated with respective edges. Generally, the edge-dependent functions refer to functions associated with different types of edges. For example, a resolver function is associated with an edge relating manufacturing data from different data systems. Other edge-dependent functions can be related to other edge types. For example, edges relating nodes representing operation assets can be associated to a transport function representing a mass transport between the operation assets. Thus, the edge-dependent functions represent a network of piecewise connected data traversal functions that allow to access respective data. The graph database thus provides an application programming interface framework for accessing the independent data systems. Thereby users can traverse different data systems and find new data through graph search functions without knowledge of the individual join relationships on the data level.

Industrial production is often organized in a plurality of organizational, operational, and productional units, that leads to a heterogeneous data structure with often many enclosed data islands, i.e. independent data systems, that can be communicatively coupled via individual data bridges. As a user, it is often impossible to know which data is present, where it is located and how to access the data. As an industrial organization, maintaining all data under one common access and storage solution is not feasible either, as there are custom data bases that are specialized for a specific use case or process step, e.g. Enterprise Resource Planning (ERP) or Manufacturing Execution Systems (MES). Thus providing an unified framework to connect these data systems allows for many advantages. The above described graph database model generally allows to provide such an application programming interface realized as a contextualized graph that facilitates search options for manufacturing data. In particular, the graph database model provides a framework to provide individual bridges between data sources, map them to an ontology model, and provide search options traversing the network. Thus, the graph database model, in particular, utilizing resolver functions, has a plurality of advantages over other possible solutions, like using relational mapping tables, etc. In particular, the graph database model does not restrict the mapping of information between data systems to relational key mappings. The resolver function custom clients are provided that allows to traverse different data systems with different interfaces. In particular, a resolver function is not limited to SQL joins but can be configured to allow to traverse any system that offers any sort of interface, e.g. shared file systems, web apis, proprietary systems , e.g. PIMS, etc. Moreover, during a context search, all key relationships, for instance, provided by a resolver function, and filters, for instance, provided by nodes, are resolved automatically by traversing the graph, thereby collecting information by referencing and accessing different data system interfaces with different data structures. This allows for queries to be placed in form of start and end node properties, without requiring knowledge about the interconnection of individual data systems, e.g. containing necessary linkage information, between start and end node. The linkage information, i.e. formulated in a traditional join statement, must not be known to the user formulating the graph search query. Further, nodes in the graph database model can be explored interactively as traversing the graph using one application programming interface framework provided by the graph database model. The graph database model provides information about connected nodes and allows for interactive exploration of the graph database model. Also graph database models can easily be extended and enriched with new data, data connections, or data types, including calculations based on data, e.g. KPIs, Al-models / agents.

In a preferred embodiment, the graph database model also allows to substitute missing information. For example, if a specific part of the manufacturing data is not available, the graph database model can be utilized to determine the missing manufacturing data based on the available manufacturing data related to the missing manufacturing data. In a specific example manufacturing data relating to an amount of a produced product is missing in the database of the industrial plant that has produced the product. The graph database can then be utilized to search for related data that allows to determine the amount. For example, accounting information related to the product can comprise the information on the payed price for the product and the price per piece allowing to determine the amount of produced product.

An example for a preferred graph database model will be explained in the following with respect to Fig. 3. Fig. 3 only shows the overall organization of the graph database such that some or the more detailed nodes are not shown. In this example, different operation units here referring also to different physical entities are represented as graph nodes and associated with information. For example, shown in Fig. 3 as signal provider, unit operation, etc. However, also manufacturing data, operational or organizational units can be represented by nodes in the graph database. The graph database model is organized in different tree layers, wherein each layer comprises the nodes representing an operation unit comprising an independent data system. The layers are indicated in Fig. 3 by the doted boundaries. For example a layer can represent the industrial processes, in Fig.3 referred to as material transport. Also planning, accounting, organization, etc. can refer to respective operation units providing manufacturing data. The layers of the graph database are related by connecting edges comprising that can comprise a resolver function. A particular preferred layer in the graph database model that is also shown in Fig. 3 is the asset hierarchy that structured the graph database, for example, in region, site, cluster, plant, process group and unit. However, also another geographically based asset hierarchy can be utilized, for example, country, region, city, site, etc. Other hierarchies exemplarily shown in Fig. 3 that can be utilized to organize the graph database model are an organization hierarchy, e.g. operating division, business unit, cost accounting hierarchy, e.g. cost center, business process, and material flow, e.g. transport edges either between unit operation or plant nodes. Interconnections between these layers are defined by typed directional edges. For example, one edge type can be defined for each layer. The typed directional edges can then comprise resolver functions that provide the access information for accessing respective data systems of a layer. In particular, each type of directional edge can be provided with a respective specific resolver function that provides the access information for the respective layers connected by the edge. Generally, the structure of the graph database model can be different for different companies or production sites. However, the principles of the graph database model, in particular, with respect to the resolver function, as described above can be applied to any company and industry.

In the following it is exemplarily described how to generate a graph database model or to implement further data to the graph database model. To onboard new data to the graph database model, i.e., to map actual data sources to the graph database model, data sources and connections are described. Further node properties are also defined during onboarding. For example, a YAML file structure can be utilized to manage the onboarding process and to edit the graph database model, for instance, to amend the model topology.

In the following an example on how to query the graph database model is described. In this example, relations, i.e. edges between nodes representing data in the graph database are resolved via the resolver function. The resolver function can be either serving constant values, where no data system external to the data system currently utilized for the graph database is to be accessed, or connecting to external data systems. The external data systems can provide respective application programming interfaces, wherein the resolver function can be provided to utilize these interfaces for access. For example, the resolver function can provide specific functions, e.g., client-based implementations on how to query external an application programming interface, or a transactional data base operation, e.g., a SQL join based on a foreign key mapping. For example, to resolve a connection between data systems of a cost center and an industrial plant, the tracks relationship comprises a resolver function that is resolved by joining data sets between two sources: Enterprise Data Lake (ADLS) and Operation Data Base (SQL) via the key mapping relationship stored in the resolver function of the tracks type edge. This relation is resolved at the time of the query and the actual data is not stored in the graph database model. The resolver function can comprise custom functions that are configured to be used to access specific legacy systems common to the process industry, such as Process Information Management Systems (PIMS). Accessing these systems can involve very specific knowledge about internal data structure, application programmer interfaces, or even require dedicated drivers. The resolver function can thus comprise the respective information to overcome this issue and to provide seamless data transfer for clients querying the graph database model. Based on the framework described above, respective graph database model search and traversal functions can be provided that make use of a query plan optimization, collapse nodes, collect access requirements, etc. Application examples are described in the following section.

A respective graph database model enables a user to travers and search connections between distributed data sources, to access the data seamlessly, and to return a consistent data set to graph clients. Context search can thereby find the path within the graph database model. For example, the question "which operating division operates a given asset" leads to backwards traversal of owned assets within the asset hierarchy until an incoming edge is found of type operates, again traversing backwards until the operating division is found. This concept can be applied to find interconnections between all nodes in the graph database model, traversing multiple layers and hierarchies, thereby finding the connection between two sets of information that have no direct connection on a data source level.

Another more complex example for a possible query, involving many different data types and sources is: "Find temperature profile for production of material A in Reactor". To answer this question, for example, it must be found a) at which plant this material was produced when, b) at which reactor was it produced and when was the reactor allocated with the material, c) what are the temperature sensors of this reactor, d) and what are the measurements of these sensors during this time frame. These questions can be answer resolving the graph database model as described above.

Thus the invention refer to a methodology for organizing, modeling, and exposing the data of multiple systems with heterogeneous data schemas and APIs in a central graph model. This is provided under a minimal single common syntax with a very adaptable and intuitive query. The method models progressively different data sources and provides access to each of them with the help of a simple but extensible query. The explicit modeling of relations between different data sources allows to traverse related data across multiple systems automatically.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the receiving of a graph database, the receiving of a query, the applying of the query and the generating of control data, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

## Claims

1. A computer implemented method for assisting in controlling and/or monitoring one or more industrial plant sites, wherein manufacturing data associated with one or more products produced by the one or more industrial plant sites is available on a plurality of independent data systems, wherein the method comprises:
- receiving a graph database model associated with the one or more industrial plant sites, wherein the graph database model is formed by a graph database comprising graph elements including graph nodes and graph edges, wherein graph edges are indicative of relations between graph nodes, wherein at least a part of the graph database comprises graph elements associated with manufacturing data, wherein a graph element in the graph database model associated with manufacturing data is further associated with a resolver function, if the manufacturing data associated with the graph element is available on different data systems, wherein the resolver function is indicative of access information on the access to the associated manufacturing data on the different data systems,
- receiving a request associated with a controlling and/or monitoring task of the one or more industrial plant sites, wherein the request is associated with graph elements of the graph database model,
- applying the received request to the graph database model by querying and/or following the graph elements in accordance with the request, wherein the querying and/or following of the graph elements comprises utilizing the access information provided by the resolver function for accessing respective associated manufacturing data when following and/or querying a graph element associated with a resolver function,
- providing a result of the application of the request to the graph database model, and
- providing control signals based on the result of the request associated with the controlling and/or monitoring task of the one or more industrial plant sites.

2. The method according to claim 1, wherein an industrial plant site comprises one or more assets utilized in one or more industrial processes producing the one or more products, wherein at least a part of the graph database model represents the one or more industrial processes and the assets performing the one or more industrial processes of the one or more industrial plant sites by mapping the assets and the material transport processes between assets to graph elements, and wherein at least a part of the manufacturing data is associated with the production process of the product, preferably, with sensor measurements during the production process of the product.

3. A method according to any of the preceding claims, wherein the access information associated with the resolver function is provided in form of functions on an application programming interface for a respective data system.

4. The method according to any of the preceding claims, wherein the one or more industrial plant sites are organized in form of different operation units each comprising and operating at least one of the plurality of independent data systems on which manufacturing data is available, wherein an operation unit is associated with the operation of one or more industrial plant sites and/or parts of one or more industrial plant sites, wherein the graph database model is organized in a layered structure in which each layer represents an operation unit and wherein edges between notes spanning two layers are associated with a resolver function.

5. The method according to claim 4, wherein the layers of the graph database model representing the operation units, are hierarchically organized in the graph database model based on a geographic context of the operation units.

6. The method according to any of the preceding claims, wherein the access information associated with the resolver function comprises at least one of authorization information, storage location information, access protocol information.

7. A computer-implemented method for generating a graph database model associated with a one or more industrial plant sites, wherein the method comprises:
- receiving manufacturing data information indicative of storage conditions of manufacturing data,
- receiving industrial plant site information indicative of physical and/or data organisational structures of the one or more industrial plant site,
- receiving data system information indicative of access information on one or more data systems associated with the one or more industrial plant site and the manufacturing data,
- generating a graph database model based on the manufacturing data information, the industrial plant site information and the data system information, wherein the graph database model is formed by a graph database comprising graph elements including graph nodes and graph edges, wherein at least a part of the graph database comprises graph elements associated with manufacturing data, wherein a graph element in the graph database model associated with manufacturing data is further associated with a resolver function, if the manufacturing data associated with the graph element is available on different data system, wherein the resolver function is indicative of access information on the access to the associated manufacturing data on the different data systems, and
- providing the generated graph database model.

8. A graph database model associated with a one or more industrial plant sites , wherein the graph database model is formed by a graph database comprising graph elements including graph nodes and graph edges, wherein graph edges are indicative of relations between graph nodes, wherein at least a part of the graph database represents **as** graph nodes manufacturing data and as graph edges relations between the manufacturing data, wherein a relation between manufacturing data represented by an edge in the graph database model is associated with a resolver function, if the manufacturing data related by the graph edge is available on different data systems, wherein the resolver function is indicative of access information on the access to the related manufacturing data on the different data systems.

9. An apparatus for assisting in controlling and/or monitoring one or more industrial plant sites, wherein manufacturing data associated with one or more products produced by the one or more industrial plant sites is available on a plurality of independent data systems, wherein the apparatus comprises one or more processors configured for:
- receiving a graph database model associated with a one or more industrial plant sites, wherein the graph database model is formed by a graph database comprising graph elements including graph nodes and graph edges, wherein graph edges are indicative of relations between graph nodes, wherein at least a part of the graph database comprises graph elements associated with manufacturing data, wherein a graph element in the graph database model associated with manufacturing data is further associated with a resolver function, if the manufacturing data associated with the graph element is available on different data system, wherein the resolver function is indicative of access information on the access to the associated manufacturing data on the different data systems,
- receiving a request associated with a controlling and/or monitoring task of the one or more industrial plant sites, wherein the request is associated with graph elements of the graph database model,
- applying the received request to the graph database model by querying and/or following the graph elements in accordance with the request, wherein the querying and/or following of the graph elements comprises utilizing the access information provided by the resolver function for accessing respective associated manufacturing data when following and/or querying a graph element associated with a resolver function,
- providing a result of the application of the request to the graph database model, and
- providing control signals based on the result of the request associated with the controlling and/or monitoring task of the one or more industrial plant sites.

10. An apparatus for generating a graph database model associated with a one or more industrial plant sites, wherein the apparatus comprises one or more processors configured for:
- receiving manufacturing data information indicative of storage conditions of manufacturing data,
- receiving industrial plant site information indicative of physical and data organisational structures of the one or more industrial plant site,
- receiving data system information indicative of access information on one or more data systems associated with the one or more industrial plant site and the manufacturing data,
- generating a graph database model based on the manufacturing data information, the industrial plant site information and the data system information, wherein the graph database model is formed by a graph database comprising graph elements including graph nodes and graph edges, wherein graph edges are indicative of relations between graph nodes, wherein at least a part of the graph database represents - as graph nodes production data and as graph edges - relations between the production data, wherein a relation between manufacturing data represented by an edge in the graph database model is associated with a resolver function, if the manufacturing data related by the graph edge is available on different data systems, wherein the resolver function is indicative of access information on the access to the related manufacturing data on the different data systems, and
- providing the generated graph database model.

11. A computer program product for controlling and/or monitoring one or more industrial plant sites, wherein the computer program product comprises program code means causing an apparatus according to claim 9 to carry out the method according to any of claims 1 to 6.

12. Control signals generated by a method according to any of claims 1 to 6 and/or the apparatus according to claim 9.

13. Use of the apparatus according 9 for controlling and/or monitoring one or more industrial plant sites.
